# EUROPEAN PATENT APPLICATION

(11) **EP 1 785 920 A1**
(43) Date of publication of application: **16.05.2007**
(21) Application number: 05077564.2
(22) Date of filing: 10.11.2005
(51) Int. Cl.: G06Q 10/00

(54) **A system for automatically selecting a plurality of specific order items from a plurality of order items, a computer implemented method, a user terminal and a computer readable storage medium**

(71) Applicant: SAP AG, 69190 Walldorf (DE)
(72) Inventor: Esau, Andreas, 76684 Östringen (DE); Ulasenka, Siarhei, 68165 Mannheim (DE); Mayer, Thomas, 69181 Leimen (DE)
(74) Representative: Winckels, Johannes Hubertus F.

(57) **Abstract**

The invention relates to a system for automatically selecting a plurality of specific order items from a plurality of order items, wherein the plurality of specific order items meet one or more predefined criteria, the system comprising:
an inbound interface for interfacing with a plurality of data storage devices in at least one of which the plurality of order items are stored as data
an execution memory operable to hold a software system; and
a processor for coupling to the inbound interface and the execution memory, the processor being operable to execute the software system such that the software system operates:
to generate one or more order due lists having a definition according to the one or more predefined criteria, using the one or more order due lists as an index to select the plurality of specific order items meeting the one or more predefined criteria,
to fill the order due lists via the inbound interface with the data corresponding to the plurality of specific order items and
to store the filled order due lists in a database.

## Description

The invention relates to a system for automatically selecting a plurality of specific order items from a plurality of order items, a computer implemented method, a user terminal and a computer readable storage medium.

Supply chain management software systems are known, for example, SAP's Supply Chain Management system. Such a supply chain management system includes a plurality of applications for implementing the management of the supply chain. These applications are for example SAP Advanced Planning and Optimization (SAP APO) and Extended Warehouse Management (EWM). A core interface (CIF) connects SAP SCM with online transaction processing systems (OLTP), such as SAP Customer Relations Management (SAP CRM) and Enterprise Resource Planning (ERP). In particular, the core interface connects the OLTP to the SAP APO. In supply chain management, when a product is available to be promised to a customer it is "available to promise" (ATP). Supply chain management systems including available to promise (ATP) functionality are known. Supply Chain Management applications, such as SAP APO include ATP functionality. Such systems include software for determining whether a product is available to promise. The determination may include performing an availability check when a customer calls to place an order.

Document data from the OLTP system, for example, the sales orders data, are stored in databases, such as LiveCache and several other database tables in SAP SCM.

A problem with conventional supply chain management systems having available to promise functionality is that when an application requires a selection to be made of specific order items fulfilling specific criteria, conventional selection software obey the selection criteria without automatically considering the item priority. Under these conventional selection criteria, due to the large data volume and its dispersal over several possible database tables, a quick search of the affected items is not possible. Thus, the quality of the application availability check is compromised.

It is desirable to address those drawbacks identified in conventional systems. In particular, it is desirable to improve the availability check. It is further desirable to increase the speed with which specific order items can be selected.

To address the above mentioned problems, there is provided according to a first aspect of the invention, a system for automatically selecting a plurality of specific order items from a plurality of order items, wherein the plurality of specific order items meet one or more predefined criteria, the system comprising:
an inbound interface for interfacing with a plurality of data storage devices in at least one of which the plurality of order items are stored as data
an execution memory operable to hold a software system; and
a processor for coupling to the inbound interface and the execution memory, the processor being operable to execute the software system such that the software system operates:
   to generate one or more order due lists having a definition according to the one or more predefined criteria, using the one or more order due lists as an index to select the plurality of specific order items meeting the one or more predefined criteria,
   to fill the order due lists via the inbound interface with the data corresponding to the plurality of specific order items and
   to store the filled order due lists in a database.

By providing order due lists which are used as an index, the selection takes place faster than a search using conventional techniques. Thus, the speed of the system is increased, i.e. a technical advantage is achieved.

According to a second aspect of the invention, there is provided a computer implemented method for automatically selecting a plurality of specific order items from a plurality of order items, wherein the plurality of specific order items meet one or more predefined criteria, the method comprising:
interfacing with a plurality of inbound data storage devices in at least one of which the plurality of order items are stored as data;
generating one or more order due lists having a definition according to the one or more predefined criteria, using the one or more order due lists as an index to select the plurality of specific order items meeting the one or more predefined criteria,
filling the order due lists via the inbound interface with the data corresponding to the plurality of specific order items and
storing the filled order due lists in a database.

According to a third aspect of the invention, there is provided a user terminal comprising means operable to perform the method of claim 13.

According to a fourth aspect of the invention, there is provided a computer readable storage medium storing a program which when run on a computer controls the computer to perform the method of claim 13.

By way of example only, embodiments of the present invention will now be described with reference to the accompanying Figures in which:
Figure 1 shows back order processing (BOP) and its triggering events;
Figure 2 shows the formation and use of order due lists (ODL) according to an embodiment of the invention;
Figure 3 shows an ODL definition according to an embodiment of the invention;
Figure 4 shows a ODL definition including a filter variant definition according to an embodiment of the invention;
Figure 5 shows the generation of an ODL table according to an embodiment of the invention;
Figure 6 shows the activation of an ODL table according to an embodiment of the invention;
Figure 7 shows the preparation of ODL table data by an ODL agent according to an embodiment of the invention, and
Figure 8 shows an example of data selection from an ODL according to an embodiment of the invention.
Like reference numerals indicate like elements.

As mentioned, SAP CRM or ERP are OLTP systems. SAP CRM and ERP are systems for the daily online transaction processing, where, for example, the sales orders are entered. SAP APO is a component of SAP SCM. SAP APO is a logistic planning system. ATP is a component of SAP APO. A core interface CIF connects the OLTP to the SAP APO. It provides functions to transfer the business data between the two types of systems. An availability check is carried out when a customer enquires about placing an order. ATP is the component that executes the availability check. The availability check takes into account existing stock and also the quantities of future incoming or outgoing orders that should be delivered by the date of the order to determine whether the product is available to promise. If a quantity (of stock or an incoming order) is promised to a first customer, a second customer cannot access the reserved quantity. If there is not enough quantity to honor a complete order as requested, the order can be confirmed at a later date or may stay unconfirmed respectively partially confirmed.

Further, in a situation where there are several orders which cannot all be confirmed, those order which cannot be confirmed become back orders. Back orders are sales documents whose order items cannot be completely confirmed as requested due to lack of availability or material shortages. Orders, including back orders, may be assigned a priority rating. For example, a high priority order and a low priority order. If a high priority order cannot be confirmed immediately, it becomes a back order. Back order processing (BOP) is a technical vehicle for dealing with back orders. BOP is a tool of the ATP component, for example in SAP APO. Using BOP, an available quantity of one or more products can be reallocated using a quantity of selected requirements. BOP may be carried out as interactive BOP or batch BOP. A processor 3, such as a back order kernel 3 carries out the back order processing which includes carrying out an availability check including RBA. At first the process decides which items of the back order are to be checked and in which sequence. In order to do this a filter is defined. The filter has a filter type which defines which criteria are used to select the items to be processed. Criteria are for example, such as, customer type, product/location, item type (for example, sales order). The filter also has a filter variant which defines which values of defined criteria meet the conditions of the filter. The order items are stored in the OLTP system.. They may also be stored in SAP APO. The filtering selects items corresponding to the particular filter to the particular data base. For example, the filter type may define a parameter - customer type. The filter variant may define the parameter value - customer type - very important or medium. In this way, the filter is defined. This filter then selects only items having a very important and medium important customer. In one embodiment, the filter can be designed to define back orders.

Two further situations are now described. In event driven quantity assignment (EDQA) back order processing including global ATP is used as an internal tool. If several orders cannot be confirmed and a quantity is received that the system can assign, back order processing is begun. For example, if a sales order is cancelled, the released quantity can be reassigned. Such a quantity assignment is called EDQA. In addition to be the cancellation of an order, the event may include incoming stock and a changed order. In a second situation, an order confirmation is reassigned. Reassignment of order confirmation (ROC) takes places if a very important order for a very important customer is created or changed and no quantity is available. In such a situation, quantities can be "stolen" from unimportant orders even if they are confirmed. For example, for orders that may be defined as a low priority order, their quantities may be reassigned to high priority orders. ROC is generally not carried out in a batch process. It may be done independently of back order processing. It may be carried out on line.

EDQA and ROC use order due lists (ODL) which are described in more detail hereinafter. Order due lists use a filter to select orders. The ODL filtering is used if the order is saved. At the time that the order item is saved, all filters of order due lists are scanned. If an ODL is activated, it is being filled by the system via inbound interface with corresponding OLTP documents.

In addition to those drawbacks mentioned above, in conventional back order processing systems, the system has to search for back ordered items. To do this conventional systems filter the whole database to find the affected items. ODLs provide an index function, and allow affected items to be stored immediately after being saved. In this way, affected items can be retrieved also quicker than in conventional systems.

The ODL is an additional data base element. It has a restricted number of fields. It performs the function of an index. It is assigned to a process, for example, EDQA. It performs a pre-selection. The function performed is that of a sorter. The ODL pre-selection can be edited manually. The pre-selection may be at least one of edited, deleted or overruled. The ODLs can be used as a reference for searching items under consideration of its priority. The order types of the handled items, the criteria to filter, and to sort them can be freely configured. Filter and sorter are defined independent from the ODL. Selection can be aborted after the number of necessary items is reached. The selection from the ODL obeys the corresponding sort profile.

The ODL has a type. The ODL type defines the nature of items that can be contained in the ODL. For example, the types 'Obtain Confirmation (RCV)', 'Lose Confirmation (SPL)', and 'Free Work List (WLS)' are supported. The filter assigned to the ODL comprises a filter type and a filter variant. The filter type defines the criteria and the variant contains the values of the criteria to select the items. Per filter type several variants can be defined. The sorter assigned to the ODL contains the criteria to sort the items. Database objects as well as source code is generated out of the settings of an ODL. An ODL comprises a database table with a specific database index, specific source code for table access. The generated database table depends on the criteria that are used to calculate the item priority (sorter). The generated source code for selection from the ODL can be used, for example, by any SAP SCM application.

The ODLs of the type 'Free Work List' are defined without specifying a filter. The assignment of the sorter is optional. They are filled manually and can be used like a notepad for order items. Items can be added to this ODL in the display of the explanation component of the availability check, in the display of the backorder processing (BOP) result, or in the display of the work list. The situations where items can be added to work list ODLs are not restricted. These work list ODLs can be used as a work list of BOP.

In conventional systems, the complete selection of affected items from several database tables and LiveCache was necessary. Sorting the items was only possible after filtering them from database. No sort / filter based reference was available. In contrast, in accordance with embodiments of the present invention, it is possible to let the customizable filter work before storing the data in a reference table. Further, a quick item search by creating a customized database object is also possible. It is possible to allow creation of ODLs only if it is needed.

ODLs can be used at any place where pre-selected lists of orders or order items are necessary (e.g. out of performance reasons). ODLs can be used, for example, in SAP SCM: during event driven quantity assignment (EDQA) and also in back order processing as a reference to items that should be confirmed, during reassignment of quantity confirmations (ROC) as a reference to items that can lose their confirmations and during backorder processing as a work list. Using ODLs a list of items fulfilling the criteria of the filter are selected. The ODL provides an index in the database table, so that all data in the table can be accessed. For example, a sales order that may be stored in LiveCache or 10 database tables where there are around 500 to 800 fields. ODL are linked to the databases, the order ID is used as a key. By accessing the database using a key is fast. The index is used to pre-select very quickly. The index is defined by customizing based on the sorter definition. In this way, the system finds all items associated with the order for BOP.

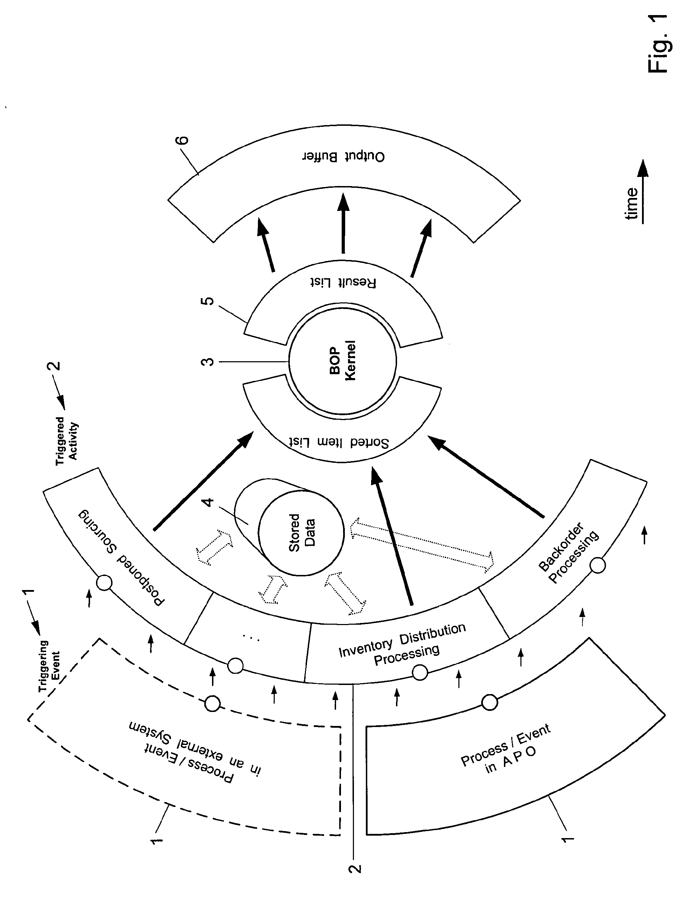

Figure 1 shows back order processing (BOP) and its triggering events. As shown in Figure 1 there is a flexible assignment of pre-defined events and triggering modules to start workflows that are related to back order processing (BOP). EDQA Agent 2 handles this assignment. EDQA agent is a tool that is related to BOP. EDQA agent uses ODLs as input for confirmation of back ordered items after being triggered, by an event, for example, by goods receipt. EDQA uses a processor, in particular, BOP kernel 3 (a BOP based process step) and its output mechanism during the workflow. For example, in Figure 1, the triggering event 1 may be a process/even in an external system, for example, a goods receipt. Once the goods are received, EDQA is triggered, as the triggered activity 2. EDQA agent 2 reads the stored data in the data storage system 4 (in this case ODL). Subsequently, BOP is carried out by the BOP kernel 3. BOP is carried out when necessary. It may be carried out as a batch. The result list 5 of the BOP is provided to an output buffer 6, which is the SAP APO storage system. The result list in the output buffer is subsequently sent to the OLTP system.

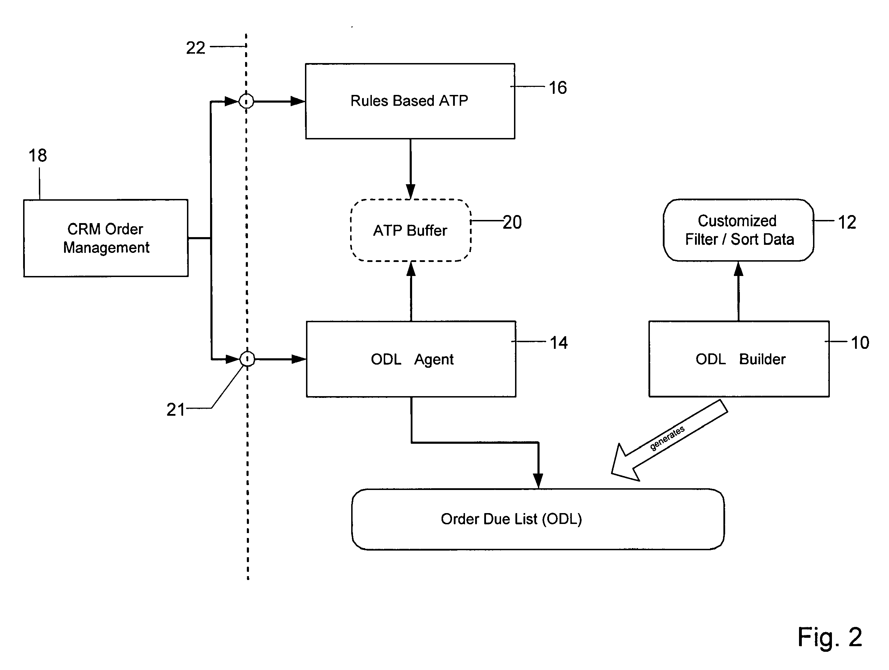

Figure 2 shows the formation and use of order due lists (ODL) according to an embodiment of the invention. In order to make a selection of potential order due lists during the EDQA efficient, an order due list is built. Generating of corresponding database tables is performed by the ODL builder 10 and based on customizable filter and sort parameters 12. The ODL builder 10 generates the selection source code, which is used during the EDQA and filter source code that is used for filling the ODL. Once the ODL is activated, the generated tables are filled by an ODL agent 14, for example, in SAP APO. The data to be filled in the generated tables is prepared by ATP rules within the sourcing process/availability check 16 caused by order processing in the OLTP system, for example, the Order Management system SAP CRM 18. The data to be filled in the tables may be buffered in an ATP buffer 20 prior to being filled in the tables by the ODL agent 14. The ATP check will store the potential order due items and corresponding product/location replacements in a temporary data buffer, ATP buffer 20. The data is stored in the ATP buffer 20 until the document is saved, as indicated by circle 21, in the OLTP system and passed to the SAP APO inbound interface 22, where the ODL agent uses this data for creating ODL entries. The ODL agent may also update and delete ODL.

The ODL is a data base table with corresponding ODL access source code. The table is generated by the ODL builder according to sort profiles to allow fast data selection. The ODL builder 10 builds the database tables of ODL in the SAP APO. The table structure depends on the sort profile which is used during the selection of the orders. The sort profile defines the sequence in which the items are to be processed. The sort profile specifies the characteristics, their sequence (or weighting) and the sort direction.

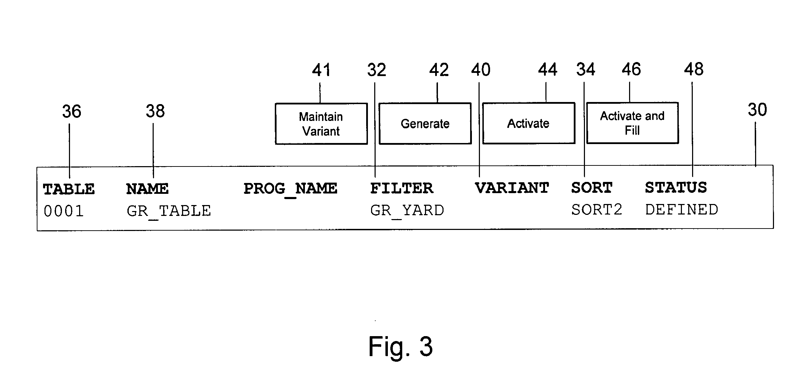

Figure 3 shows an ODL definition according to an embodiment of the invention. The ODL definition 30 includes a predefined filter type 32, for example, a filter type: GR_YARD (Goods Receipt In Yard), which allows orders according to the criteria defined in it. The ODL definition 30 may also include a sort profile 34, for example, a sort profile: SORT 2. The filter type 32 and the sort profile 34 may be customizable. The ODL 30 has an identifier 36 and a name 38. A filter variant 40 with filter conditions for a filter type can be created and used. As mentioned above, the filter selects items corresponding to the particular filter to the particular data base. For example, the filter type may define a parameter - customer type. The filter variant may define the parameter value - customer type - very important or medium. The variant can be maintained by clicking on the maintain variant icon 41. The predefined sort profile 34 is chosen. In the example shown, the sort profile 34 is SORT2. Once the ODL is defined, the corresponding table can be generated by clicking on generate icon 42. A generated table can be activated by clicking on the activate icon 44. It can be activated and filled by data stored in a database by clicking on the icon activate and fill 46. In the example shown it is seen that the ODL definition 30 includes a status 48 which shows that the ODL is defined.

The ODL builder 10 data basis comprises the following object groups: structure for definition of fields valid for all filter types and sort profiles, database tables for filter definition and generation of corresponding program code statements, database tables for sort profile definition and generation of corresponding program code statements and database table for assigning of filter/sort to ODL tables and generation/activation of the tables.

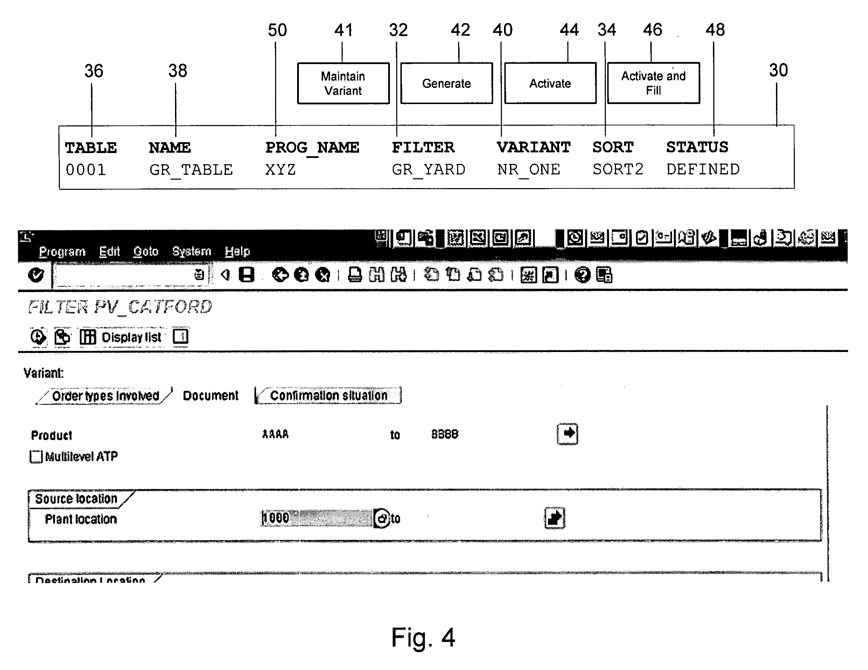

Figure 4 shows an ODL definition including a filter variant definition according to an embodiment of the invention. Having chosen a filter type 32, a filter variant 40 that is valid for the filter type can be chosen. The variant is predefined, i.e. already created and maintained. Further, the filter variant can be maintained. It is also possible to create a filter variant. The filter variant includes the filter conditions according to the filter type parameters. The filter variant 40 and the filter type 32 build together the actual filter 32, 40. Further, a sort profile 34 can be chosen from one of the predetermined, maintained sort profiles. Within the maintenance view screen it is also possible to change ODL description, delete ODLs, generate ODLs, drop and refresh code, activate ODLs 44, activate and fill tables 46, deactivate ODLs. As mentioned, the filter type definition, the sort profile definition can be customized.

Below the ODL definition a screen shot shows an example of a filter variant. The filter parameters 'product' and 'source location' are chosen and can be maintained.

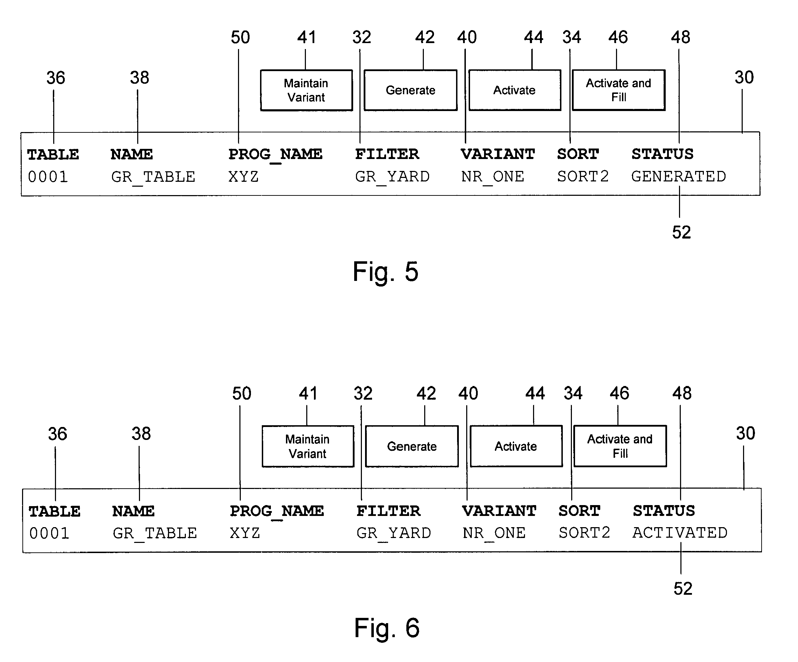

Figure 5 shows the generation of an ODL table according to an embodiment of the invention. Based on the sort profile 34, a database table with appropriate database index is generated by clicking on the generate icon 42. Based on the chosen filter 32 and program code template, a program name 50, for example, XYZ, and program code for filling the table by the ODL agent 14 is generated. Based on the chosen sort profile 34 and program code template, a program name 50 and program code for selection from the table by EDQA is generated. Once generated, the status 48 of the ODL becomes GENERATED 52. It is noted that the ODL table, although generated, does not contain any entries at this point.

Figure 6 shows the activation of an ODL table according to an embodiment of the invention. Activation of a table by clicking on the activate icon 44 immediately enables filling it by necessary and eligible index date. The function activate and fill 46 can be used for filling the table with index data of possibly already existing backorder items, which are eligible for the table. The ODL (filter/sort) can be valid for greater than or equal to 1 trigger events 1. Reassigning a filter/sort makes ODL reorganization necessary. For example, if it is decided to use a different filter but the existing data does not meet the conditions of reorganizing.

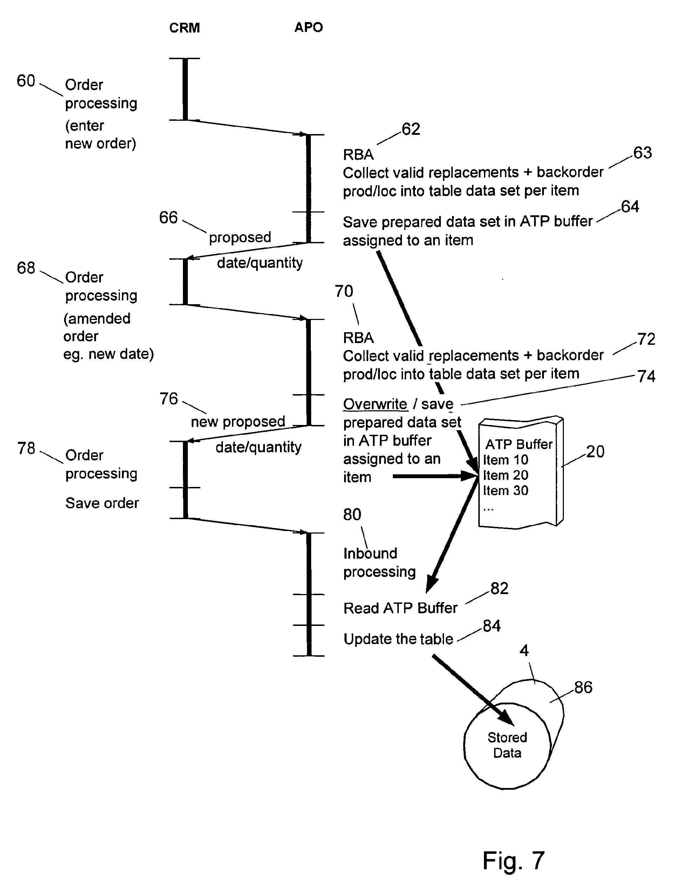

Figure 7 shows the preparation of ODL table data by an ODL agent according to an embodiment of the invention. Having generated and activated one or more ODL tables, as described above, the following functionality is achieved. At the time global ATP is called, a data set is prepared. The ODL agent 14 uses this data set for filling the ODL tables. The data set includes the following information: a list of product/location combinations that are valid for the item and result from the RBA, product/location combination where the replenishment indicator from master data has an appropriate value. Collected data is assigned to corresponding items and saved in the ATP buffer 20 until the order is saved in the OLTP system and the ODL agent 14 in SAP APO inbound read them and extract the list of possible product/location combinations. In particular, Figure 7 shows the interaction between SAP CRM and SAP APO according to an embodiment of the invention. In SAP CRM a new order is entered (step 60) in order processing. For example, the new order may include a product, an amount and a date for delivery. Once entered, SAP APO carries out an availability check, for example, a RBA (step 62). Within the availability check valid location product replacements, as well as the location product where the backorder is created, are collected per item (step 63). The prepared, collected data set is saved in the ATP buffer 20 assigned to an item (step 64). On the basis of the availability check, SAP APO returns a proposed date and quantity back to the SAP CRM (step 66). In SAP CRM order processing processes the amended order on the basis of the proposed date and quantity (step 68). For example, the amended order may have a new request date. Once amended, SAP APO carries out an availability check for the amended order. Again, valid location product replacements, as well as the location product where the backorder is created, are collected per item (step 72). Subsequently, the prepared data set in the ATP buffer 20 assigned to an item is overwritten and saved (step 74). A new proposed date and quantity, on the basis of the availability check (step 70) is provided to SAP CRM (step 76). In order processing in SAP CRM, if the new proposed date and quantity are ok, the order is saved (step 78). Once the order is saved, inbound processing occurs (step 80). The ATP buffer 20 is read (step 82). The ODL table is filled (step 84) by ODL agent 14. The filled table is stored in a storage medium 4 (step 86). As mentioned previously, in this way, the ODLs provide an index function which allows affected items to be stored immediately after being saved. In this way, affected items can be retrieved also quicker than in conventional systems. If rules based ATP (RBA) is applied on an item, ATP rules evaluation will compile the product/location list which is needed by the ODL agent 14 after the order was saved in the OLTP system. The compilation of the list is influenced by: customizing of a rule strategy list. In order to avoid unnecessary data transfer by the ODL agent 14, the process customising defined which rule strategies are to be taken into account for replacements list creation during the ATP check/rules evaluation. The list of valid product/location combinations is compiled for each rule strategy (one or more per item), which is maintained for EDQA. It is further influenced by the business transaction. The business transaction parameter can furthermore control the list compilation. Data set preparation is, for example, carried out during online/batch order processing and postponed sourcing. It is further influenced by: rules evaluation tolerance. A flag, which controls the completeness of the product/location replacement list that results from the RBA. If switched on, only product/location combinations that result from executed rules evaluation will be considered. If switched off, all possible product/location combination that could result from RBA will be considered.

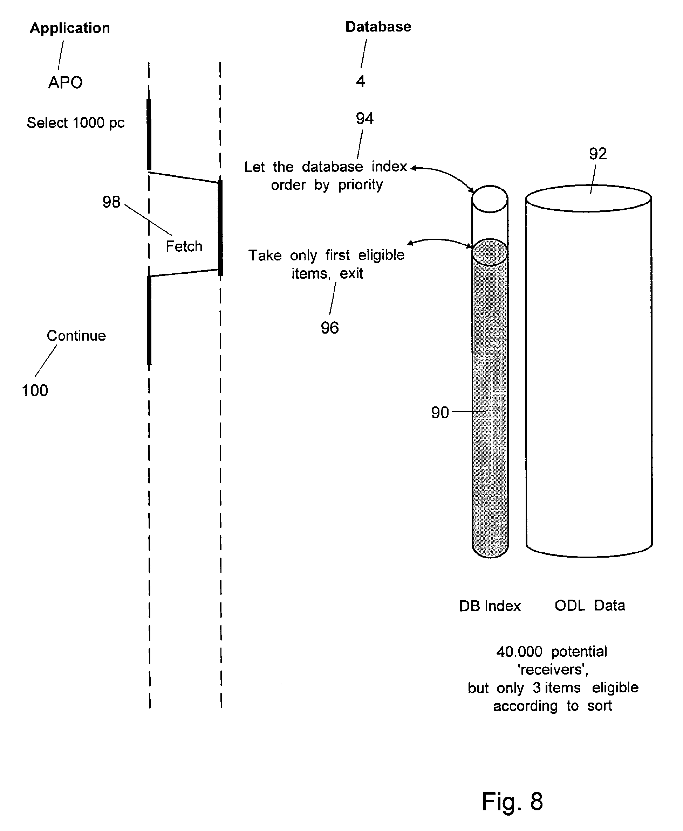

Figure 8 shows an example of data selection from an ODL according to an embodiment of the invention. In particular, Figure 8 shows how with the ODL providing an index 90 to the database 4, affected items in the ODL data 92 are found without having to search entire databases. The application SAP APO selects 1000 pieces. Using the ODLs, the database index sorts the ODL data by priority (step 94). Only the first eligible (affected) items are taken (step 96). The items are fetched (step 98) and the process in the application continue (step 100). In this way, if there are 40000 potential receivers of the 1000 pc, but only 3 items eligible according to the sort profile, the 3 eligible (affected) items are found first, since the database index allows the database to order the ODL data by priority.

It should be noted that the above-mentioned embodiments illustrate rather than limit the invention, and that those skilled in the art will be able to design alternatives without departing from the scope of the appended claims. For example, the computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output. The mere fact that certain measures are recited in mutually different claims does not indicate that a combination of these measures cannot be used to advantage.

## Claims

1. A system for automatically selecting a plurality of specific order items from a plurality of order items, wherein the plurality of specific order items meet one or more predefined criteria, the system comprising:
an inbound interface for interfacing with a plurality of data storage devices in at least one of which the plurality of order items are stored as data
an execution memory operable to hold a software system; and
a processor for coupling to the inbound interface and the execution memory, the processor being operable to execute the software system such that the software system operates:
to generate one or more order due lists having a definition according to the one or more predefined criteria, using the one or more order due lists as an index to select the plurality of specific order items meeting the one or more predefined criteria,
to fill the order due lists via the inbound interface with the data corresponding to the plurality of specific order items and
to store the filled order due lists in a database.

2. A system according to claim 1, wherein the order due list is a database element.

3. A system according to any preceding claim, wherein the software system operates to abort the selection when a predefined number of specific order items are reached.

4. A system according to any preceding claim, wherein the one or more order due list functions as an index.

5. A system according to any preceding claim, wherein the software system operates to save the plurality of specific order items.

6. A system according to any preceding claim, wherein the plurality of specific order items are stored in a buffer.

7. A system according to any preceding claim, wherein the software system operates to: build the one or more order due lists in accordance with customizable criteria.

8. A system according to any preceding claim, wherein the definition includes a filter for filtering the plurality of order items.

9. A system according to claim 8, wherein the filter includes a filter type to select one or more order items according to predefined criteria.

10. A system according to any preceding claim, wherein the definition includes a sort profile to prioritize the plurality of specific order items.

11. A system according to claim 8, wherein the filter includes a filter variant.

12. A system according to any preceding claim, wherein the filter is customizable by at least one of a system and user in accordance with at least one of a system and user preference, respectively.

13. A computer implemented method for automatically selecting a plurality of specific order items from a plurality of order items, wherein the plurality of specific order items meet one or more predefined criteria, the method comprising:
interfacing with a plurality of inbound data storage devices in at least one of which the plurality of order items are stored as data;
generating one or more order due lists having a definition according to the one or more predefined criteria, using the one or more order due lists as an index to select the plurality of specific order items meeting the one or more predefined criteria,
filling the order due lists via the inbound interface with the data corresponding to the plurality of specific order items and
storing the filled order due lists in a database.

14. A user terminal comprising means operable to perform the method of claim 13.

15. A computer readable storage medium storing a program which when run on a computer controls the computer to perform the method of claim 13.
